Europäisches Patentamt

European Patent Office

Office européen des brevets

(19)

(11) Veröffentlichungsnummer : **0 374 610 B1**

(12) **EUROPÄISCHE PATENTSCHRIFT**

(45) Veröffentlichungstag der Patentschrift :
25.11.92 Patentblatt 92/48

(51) Int. Cl.⁵ : **F16F 7/10, B62D 37/04**

(21) Anmeldenummer : **89122606.0**

(22) Anmeldetag : **07.12.89**

(54) **Schwingungstilger.**

(30) Priorität : **23.12.88 DE 3843676**

(43) Veröffentlichungstag der Anmeldung :
**27.06.90 Patentblatt 90/26**

(45) Bekanntmachung des Hinweises auf die
Patenterteilung :
**25.11.92 Patentblatt 92/48**

(84) Benannte Vertragsstaaten :
**DE FR GB IT**

(56) Entgegenhaltungen :
**DE-A- 2 036 979
DE-B- 1 135 246
DE-C- 228 586**

(56) Entgegenhaltungen :
**PATENT ABSTRACTS OF JAPAN, Band 8, Nr.
154 (M-310)[1591], 18. Juli 1984; & JP-A-59 50
243 (NIPPON KOKAN K.K.) 23-03-1984
PATENT ABSTRACTS OF JAPAN, Band 9, Nr.
94 (M-374)[1817], 24. April 1985; & JP-A-59 219
539 (MITSUBISHI DENKI K.K.)10-12-1984**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Freymann, Raymond, Dr.
Bahnhofstrasse 27
W-8057 Eching (DE)
Erfinder : Keck, Albrecht
Dachauer Strasse 23
W-8042 Oberschleissheim (DE)
Erfinder : Haas, Anton
Burgstrasse 10
W-8110 Garmisch-Partenkirchen (DE)**

EP 0 374 610 B1

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

**Beschreibung**

Die Erfindung betrifft einen Schwingungstilger gemäß dem Oberbegriff des Anspruchs 1.

Bei Fahrzeugen ohne stabilen Dachverband, insbesondere bei Cabriolets oder bei Lastkraftfahrzeugen, treten elastische Torsionseigenschwingungen im niedrigen Frequenzbereich auf. Dies ist darauf zurückzuführen, daß die Torsionssteifigkeit bei diesen Fahrzeugen deutlich reduziert ist. Die geringere Torsionssteifigkeit macht sich durch "Zitterschwingungen" bemerkbar, die beispielsweise beim Fahren über eine unebene Straße auftreten.

Es ist bereits ein Schwingungstilger bekannt, der zur Vermeidung der oben genannten Zitterschwingungen in einem Cabriolet eingebaut ist. Der Schwingungstilger besteht aus einer relativ schweren Tilgermasse, die über vier Gummilagerelemente mit hydraulischer Dämpfung mit der Fahrzeugkarosserie verbunden ist. Dieser Schwingungstilger hat jedoch den Nachteil, daß die Eigenfrequenz des Schwingungstilgers genau auf die Eigenfrequenz der Fahrzeugtorsionsschwingung abgestimmt sein muß. Die Abstimmung erfordert eine genaue Einhaltung der Werte für die Steifigkeiten der Tilgerlagerung. Von Nachteil ist ferner, daß ein relativ schwerer Schwingungstilger eingebaut werden muß, damit der durch den Schwingungstilger abgedeckte Frequenzbereich genügend groß ist, um sowohl die Fertigungstoleranzen des Schwingungstilgers als auch des Fahrzeuges zu umfassen.

Aus der DE-C-228 586 ist bereits ein Schwingungstilger mit einer Tilgermasse bekannt, die über eine Lageranordnung mit einem Schiffsdeck verbunden ist. Die Lageranordnung besteht aus einer Tilgerfeder und einem Tilgerdämpfer. Die Tilgermasse ist auf einer Seite um ein Gelenk schwenkbar gelagert und stützt sich auf der dazu gegenüberliegenden Seite über die Lageranordnung auf dem Schiffsdeck ab, wobei die Tilgermasse in bezug auf das Gelenk verstellbar angeordnet ist. Von Nachteil ist, daß die Tilgermasse relativ schwer sein muß, damit der durch den Schwingungstilger abgedeckte Frequenzbereich für die erforderlichen Zwecke ausreichend ist. Darüber hinaus erfordert der bekannte Schwingungstilger relativ viel Platz. Im Hinblick auf den Kraftstoffverbrauch ist bei Kraftfahrzeugen die Erhöhung des Gesamtgewichtes zu vermeiden. Aufgrund der bei Kraftfahrzeugen, insbesondere Personenkraftfahrzeugen, beengten Raumverhältnisse ist die Anordnung eines zusätzlichen Bauteils unerwünscht.

Aufgabe der Erfindung ist es, einen Schwingungstilger zu schaffen, der die beim Stand der Technik auftretenden Nachteile vermeidet und eine wirkungsvolle Dämpfung der Torsionseigenschwingungen des Fahrzeuges innerhalb eines größeren Frequenzbereiches ermöglicht.

Diese Aufgabe wird erfindungsgemäß durch die Merkmale des kennzeichnenden Teils des Anspruchs 1 gelöst.

Zur Berechnung der Eigenfrequenz des erfindungsgemäßen Schwingungstilgers betrachtet man den Schwingungstilger als ein Pendel. In den nachfolgenden Gleichungen bedeuten:

c  Federsteifigkeit der Lageranordnung (N/mm)

m  wirksame Tilgermasse (kg)

$\theta$  Trägheitsmoment der Tilgermasse um ihren Schwerpunkt (kg x mm$^2$ )

a  Abstand zwischen Gelenk und Lageranordnung (mm)

b  Abstand zwischen Gelenk und Schwerpunkt (mm)

f  Eigenfrequenz (1/s)

Nach Einsetzen dieser Größen in die Gleichung:

$$f = \frac{1}{2\pi} \sqrt{\frac{c_T}{m_T}}$$

ergibt sich

$$f = \frac{1}{2\pi} \sqrt{\frac{c \times a^2}{\theta + m \times b^2}}$$

Die Eigenfrequenz des Schwingungstilgers kann somit durch eine Änderung der wirksamen Drehsteifigkeit "c x a$^2$ " eingestellt werden, indem der Abstand "a" verändert wird. Ferner kann die Eigenfrequenz des Schwingungstilgers durch eine Änderung des wirksamen Trägheitsmomentes "$\theta$ + m x b$^2$ " eingestellt werden, indem der Abstand "b" variiert wird.

Aus dem oben genannten ergibt sich, daß die Einstellung der Eigenfrequenz des Schwingungstilgers bei einer konstanten Drehsteifigkeit "c" und einer konstanten Tilgermasse "m" möglich ist. Die Einstellung der Eigenfrequenz des Schwingungstilgers erfolgt in einfacher Weise dadurch, daß die Tilgermasse und-/oder die Lageranordnung verschoben wird. Mit dem erfindungsgemäßen Schwingungstilger ist es möglich, das Schwingungsverhalten eines jeden Fahrzeuges optimal abzustimmen. Der von dem Schwingungstilger einstellbare Frequenzbereich ist mindestens so groß wie der Streubereich der Torsionseigenfrequenzen der Fahrzeuge, der bei der Serienherstellung auftritt. Von Vorteil ist ferner, daß das Gewicht des Schwingungstilgers auf ein Minimum reduziert werden kann. Durch den erfindungsgemäßen Aufbau des Schwingungstilgers ist eine ausreichende Stabilität gewährleistet, so daß kein Kippen des Schwingungstilgers möglich ist. Ferner ist die Verwendung eines einheitlichen Schwingungstilgers mit gleichem Aufbau bei verschiedenen Fahrzeugen möglich. Eine weitere Gewichtsreduzierung ergibt sich dadurch, daß statt einer "toten Masse" ein Fahrzeugbauteil als Tilgermasse verwendet wird. Für diesen Zweck eignet sich insbesondere die Batterie des Fahrzeuges. Neben der oben erwähnten direkten Verschiebung der Tilgermasse zur Veränderung des Abstandes "b", kann eine Zusatzmasse in bezug auf das Drehgelenk verschoben werden. Von Vorteil ist ferner, daß die Einstellung der Eigenfrequenz des Schwingungstilgers ständig auf die jeweilige Torsionseigenfrequenz des Fahrzeuges abgestimmt werden kann. Dies ist deshalb von Bedeutung, da sich die Torsionseigenfrequenz eines Fahrzeuges spürbar verschieben kann. Unterschiedliche Torsionseigenfrequenzen ergeben sich dann, wenn das Fahrzeug entweder mit einem offenen oder mit einem geschlossenen Verdeck oder mit einem Hardtop gefahren wird. Ferner kann sich der Beladungszustand des Fahrzeuges auf die Torsionseigenfrequenz auswirken. Die automatische Einstellung der Tilgereigenfrequenz des Schwingungstilgers auf die jeweilige Torsionseigenfrequenz des Fahrzeuges wird durch den Einbau des Schwingungstilgers in einen Regelkreis erreicht. Durch eine unterschiedliche Arbeitsweise des Regelkreises kann entweder eine langsame oder eine schnelle Einstellung der Eigenfrequenz des Schwingungstilgers auf die jeweilige Torsionseigenfrequenz des Fahrzeuges erfolgen.

Ausführungsformen eines Schwingungstilgers werden nachstehend anhand der Zeichnungen beispielshalber dargestellt. Dabei zeigen:

Fig. 1 eine Draufsicht auf einen bekannten Schwingungstilger,

Fig. 2 eine Ansicht von vorne auf den in der Fig. 1 gezeigten Schwingungstilger,

Fig. 3 eine Seitenansicht einer ersten Ausführungsform eines Schwingungstilgers,

Fig. 4 eine Ansicht von vorne des in der Fig. 3 gezeigten Schwingungstilgers,

Fig. 5 eine teilweise geschnittene Ansicht einer zweiten Ausführungsform eines Schwingungstilgers,

Fig. 6 eine Ansicht von vorne einer Einzelheit des Schwingungstilgers im Schnitt längs der Linie I-I in der Fig. 5,

Fig. 7 eine Seitenansicht einer dritten Ausführungsform eines Schwingungstilgers;

Fig. 8 eine Seitenansicht einer vierten Ausführungsform eines Schwingungstilgers, bei der die Abstimmung der Eigenfrequenz des Schwingungstilgers auf die Torsionseigenfrequenz des Fahrzeuges in einem Regelkreis erfolgt,

Fig. 9 eine Seitenansicht einer fünften Ausführungsform eines Schwingungstilgers, die ebenfalls in einem Regelkreis eingebaut ist,

Fig. 10 ein Diagramm, das die Torsionseigenfrequenzen eines Fahrzeuges in Abhängigkeit von dem Einbau eines Schwingungstilgers zeigt,

Fig. 11 ein Diagramm, das die Auswirkungen einer optimalen bzw. nicht optimalen Abstimmung der Eigenfrequenz des Schwingungstilgers auf das Schwingungsverhalten des Fahrzeuges zeigt.

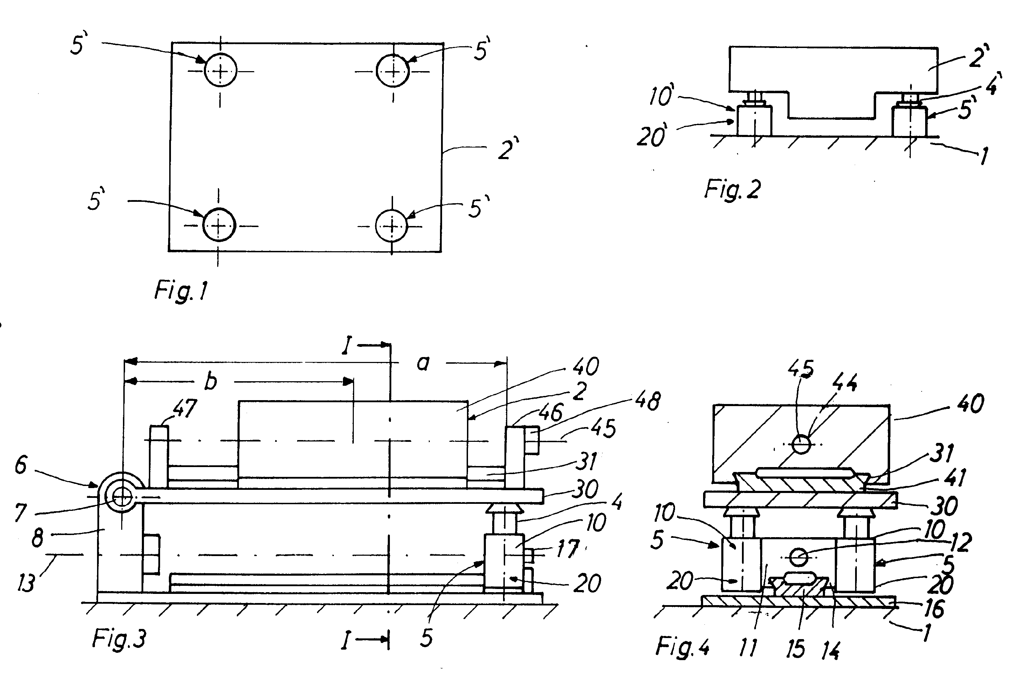

In den Fig. 1 und 2 ist ein bereits bekannter Schwingungstilger gezeigt, der in einem Kofferraum eines Cabriolets unterhalb einer Fahrzeugbatterie angeordnet ist. Als Tilgermasse 2' wird ein quaderförmiger Stahlkörper verwendet, der sich über vier stabförmige Füße 4' auf jeweils darunter angeordnete Lageranordnungen 5' abstützt, die jeweils mit der Fahrzeugkarosserie 1 fest verbunden sind. Jede Lageranordnung 5' besteht aus einer Tilgerfeder 10' und einem dazu parallel geschalteten hydraulischen Tilgerdämpfer 20'. Zur Abstimmung dieses Schwingungstilgers auf das Schwingungsverhalten des Fahrzeuges ist es erforderlich, daß die Steifigkeiten der Tilgerlagerung innerhalb einer engen Fertigungstoleranz liegen und daß das Gewicht der Tilgermasse 2' relativ groß ist und im vorliegenden Fall ca. 22 kg beträgt. Das große Gewicht der Tilgermasse 2' führt aufgrund der auftretenden hohen Kippmomenten zu Problemen bei der Lagerung des Schwingungstilgers.

In den Fig. 3 und 4 ist eine erste Ausführungsform eines Schwingungstilgers gezeigt, dessen Eigenfrequenz manuell einstellbar ist. Die Tilgermasse 2 ist ein quaderförmiger Körper 40, der über Führungen 31, 41 auf einer Auslegerplatte 30 über eine Spindel 45 verschiebbar angeordnet ist. Die Auslegerplatte 30 ist an ihrem einen Ende um eine Achse 7 eines Gelenkes 6 schwenkbar gelagert. Das gegenüberliegende Ende der Auslegerplatte 30 stützt sich über Füße 4 auf zwei Lageranordnungen 5 ab, die jeweils aus einer Tilgerfeder 10 und einem dazu parallel geschalteten Tilgerdämpfer 20 bestehen. Wie aus der Fig. 4 hervorgeht, sind die beiden Lageranordnungen 5 über einen Steg 11 miteinander verbunden. Der Steg weist in der Mitte eine Mutter 12 für eine Spindel 13 auf. Das gegenüberliegende Ende der Spindel 13 ist im Arm 8 des Drehgelenkes 6 gelagert. An der der Karosserie 1 zugewandten Seite des Steges 11 ist eine Führungsnut 14 für eine Führung 15 ausgebildet. Die Führung 15 kann entweder direkt an der Karosserie 1 oder unter Zwischenschaltung einer Platte 16 an der Karosserie 1 befestigt sein. Die Spindel 45 zur Verschiebung der Tilgermasse 2 ist an ihren beiden Enden in zwei Lagerarmen 46 und 47 gelagert. Zur Übertragung der Drehbewegung ist im Körper 40 der Tilgermasse 2 eine Mutter 44 ausgebildet. Über ein Verstelleinrichtung 48 wird die Spindel 45 gedreht und damit die Lage des Körpers 40 verstellt. Eine entsprechende Verstelleinrichtung 17 ist auch an der Spindel 13 vorgesehen. In der gezeigten Ausführungsform sind die Führungen 31, 41 und 14, 15 als eine Schwalbenschwanzführung ausgebildet.

In der Fig. 3 sind ferner der Abstand "a" der beiden Lageranordnungen 5 in bezug auf das Drehgelenk 6 dargestellt. Ferner ist der Abstand "b" des Schwerpunktes des Tilgerkörpers 40 in bezug auf das Drehgelenk 6 eingezeichnet.

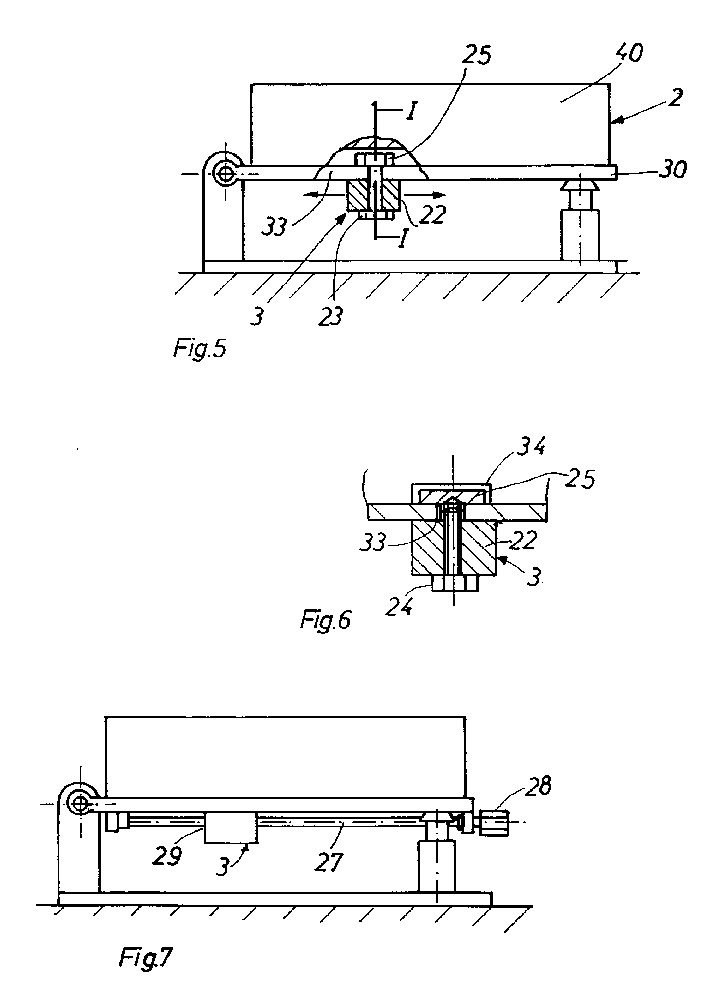

In den Fig. 5 und 6 ist eine zweite Ausführungsform eines Schwingungstilgers gezeigt, bei dem die Änderung der Eigenfrequenz des Schwingungstilgers durch das Verschieben einer Zusatzmasse 3 erfolgt. Durch die Verschiebung der Zusatzmasse verändert sich die Lage des Schwerpunktes der wirksamen Tilgermasse und somit auch der Abstand b in bezug auf das Gelenk 6. Folglich ist die Eigenfrequenz des Schwingungstilgers hoch, wenn sich die Zusatzmasse 3 in unmittelbarer Nähe des Drehgelenkes 6 befindet und entsprechend niedrig, wenn die Zusatzmasse 3 in der Nähe der Lageranordnung 5 eingestellt ist. Als Zusatzmasse 3 wird ein quaderförmiger Körper 22 verwendet, der über eine Schraube 23 in einem Langloch 33 der Auslegerplatte 30 geführt wird. Der Schraubenkopf 24 hält den zusätzlichen Körper 22, während das andere Ende der Schraube 23 in eine Mutter 25 geschraubt ist, die sich neben dem Langloch 33 auf der Auslegerplatte 30 abstützt. Entsprechend der Größe der Mutter 25 ist eine Nut 34 im Tilgerkörper 40 ausgebildet.

In der Fig. 7 ist eine dritte Ausführungsform eines Schwingungstilgers gezeigt, bei der die Verschiebung der Zusatzmasse 3 durch eine Spindel 27 und eine daran angeordnete Verstelleinrichtung 28 erfolgt, wobei im Tilgerkörper 22 der Zusatzmasse 3 eine Mutter 29 für die Spindel 27 ausgebildet ist.

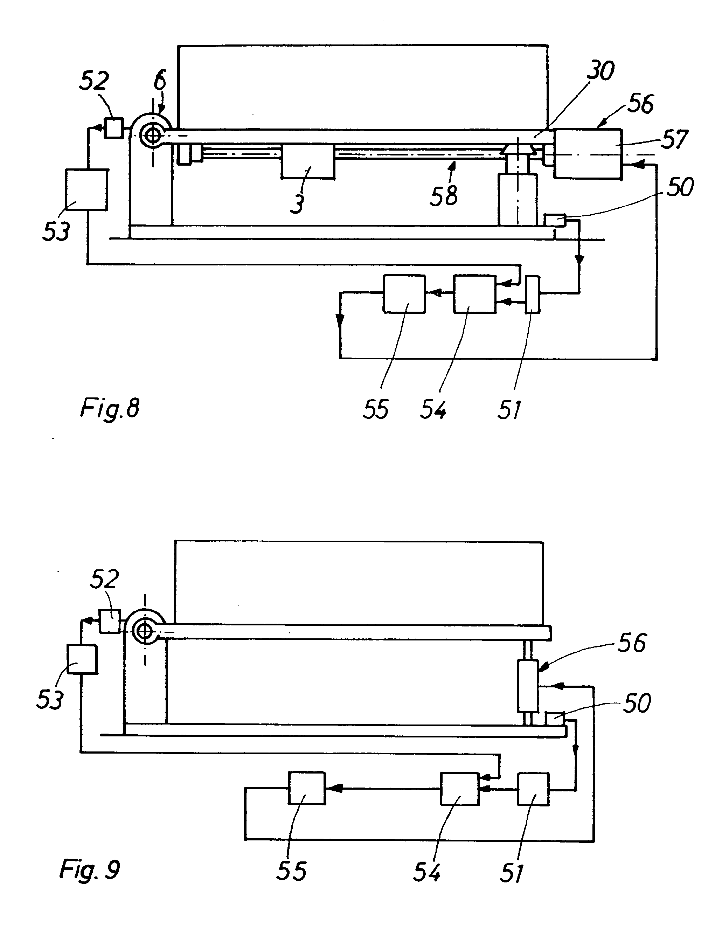

Die Fig. 8 zeigt eine vierte Ausführungsform eines Schwingungstilgers, der in einen Regelkreis eingebaut ist und automatisch entsprechend den Änderungen der Torsionseigenfrequenz des Fahrzeuges verstellt wird. Der Regelkreis besteht aus einem Sensor 50, der Werte ermittelt, aus denen sich die momentane Torsionseigenfrequenz des Fahrzeuges, das heißt der Sollwert der Regelgröße, ergibt. Im vorliegenden Fall mißt der Sensor 50 die Torsionsbeschleunigung des Fahrzeuges. In einem Meßwertumformer 51 wird die Torsionsbeschleunigung in die Torsionseigenfrequenz bzw. in die Vergrößerungsfunktion umgerechnet. Ein zweiter Sensor 52 ist am Drehgelenk 6 angeordnet und mißt die Änderung des Drehwinkels der Auslegerplatte 30. Diese Werte werden einem zweiten Meßwertumformer 53 zugeführt, der aus den Meßwerten die momentane Eigenfrequenz oder die Vergrößerungsfunktion des Schwingungstilgers, das heißt den Istwert der Regelgröße, ermittelt. Die umgeformten Werte des Schwingungstilgers bzw. des Fahrzeuges werden einem Soll-Istwert-Vergleicher 54 zugeführt, der eine Soll-Istwert-Differenz bildet. Die ermittelte Soll-Istwert-Differenz wird an einen Regler 55 weitergeleitet, der zu diskreten Zeitpunkten eine Stellgröße erzeugt. In Abhängigkeit von der Stellgröße wird ein Stellglied 56 betätigt, das die Regelgröße, das heißt die Tilgereigenfrequenz, einstellt. In der Fig. 8 besteht das Stellglied 56 aus einem Stellmotor 57 und einem von dem Stellmotor 57 angetriebenen Spindeltrieb 58, der die Lage einer Zusatzmasse 3 bei einer Drehbewegung der Spindel verändert. Mit der in der Fig. 8 gezeigten Ausführungsform ist eine quasistationäre Nachführung der Eigenfrequenz des Schwingungstilgers möglich. Zur Erreichung dieses Zieles messen die Sensoren 50 und 52 in definierten Zeitabständen die momentanen Werte der Torsionseigenfrequenz des Fahrzeuges bzw. der Eigenfrequenz des Schwingungstilgers. Zu diesem Zweck weisen die Meßwertumformer 51, 53 beispielsweise jeweils ein Abtastglied auf. Entsprechend dem Zeitabstand wird die Zusatzmasse 3 verstellt. Bei der beschriebenen Ausführungsform erfolgt die Nachstellung beispielsweise in Abständen von 10 Minuten.

Fig. 9 zeigt eine fünfte Ausführungsform des Schwingungstilgers, bei der die Eigenfrequenz des Schwingungstilgers ständig den momentanen Torsionseigenfrequenzen des Fahrzeuges angepaßt wird. Der Regelkreis besteht aus zwei Sensoren 50 und 52, zwei Meßwertumformern 51 und 53, einem Soll-Istwert-Vergleicher 54, einem Proportional-Integral-Differential-Regler 55 und einem Stellglied 56. Zur Übertragung der sich unter Umständen schnell ändernden Stellgröße, muß das Stellglied 56 entsprechend schnell die Stellgröße übertragen können. Zu diesem Zweck kann es sich bei dem Stellglied 56 beispielsweise um einen elektrodynamischen Erreger oder um einen servohydraulisch geregelten Stellzylinder handeln, die beispielsweise die gewünschte Steifigkeit und/oder Dämpfung des Schwingungstilgers simulieren. Ferner kann das Stellglied (56) parallel zur Lageranordnung (5) geschaltet sein.

Neben einer getrennten Verstellung der Tilgermasse 2 oder der Zusatzmasse 3 oder der Lageranordnung 5 kann auch eine kombinierte Verstellung der einzelnen Teile 2, 3 und 5 vorgenommen werden. Der Schwingungstilger ist in der Regel ebenfalls im Kofferraum eines Fahrzeuges angeordnet, da dort der Schwingungstilger in bezug auf die Torsionseigenschwingungen des Fahrzeuges einen großen Wirkungsgrad hat.

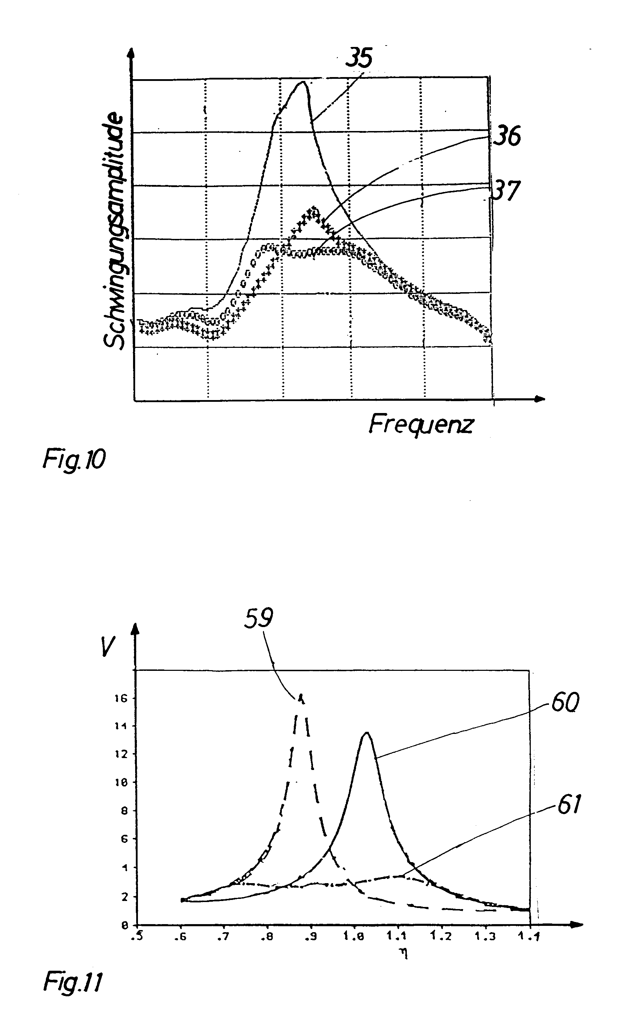

In der Fig. 10 ist ein Diagramm abgebildet, bei der auf der Ordinate die Schwingungsamplitude eines Fahrzeuges über der Frequenz als Abszisse aufgetragen ist. Im Diagramm sind drei Kurven 35, 36 und 37 aufgetragen. Die punktierte Kurve 35 zeigt das Schwingungsverhalten eines Fahrzeuges, das keinen Schwingungstilger aufweist. Die durch Sternchen gebildete Kurve 36 zeigt das Schwingungsverhalten eines Fahrzeuges, das mit einem bekannten Schwingungstilger gedämpft wird. Die durch kleine Kreise gebildete Kurve 37 gibt das Schwingungsverhalten eines Fahrzeuges wieder, das mit einem Schwingungstilger gemäß den Fig. 3 bis 8 ausgestattet ist.

Die Fig. 11 zeigt ein Diagramm, in dem die Vergrößerungsfunktion V der Fahrzeugbewegung im Torsionsfreiheitsgrad über dem Frequenzverhältnis η aufgetragen ist. Die Fig. 11 zeigt drei Kurven 59, 60 und 61. Die gestrichelte Kurve 59 entspricht einer Vergrößerungsfunktion V, wenn die Tilgereigenfrequenz zu hoch ist. Die in einer durchgezogenen Linie gezeichnete Kurve 60 entspricht einer Vergrößerungsfunktion, wenn die Tilgereigenfrequenz zu niedrig ist. Die in einer strichpunktierten Linie dargestellte Kurve 61 zeigt eine Vergrößerungsfunktion eines optimal abgestimmten Schwingungstilgers. Durch die in den Fig. 8 und 9 gezeigten Regelkreise werden zu hohe und zu niedrige Tilgereigenfrequenzen vermieden und eine entsprechend der Kurve 61 abgestimmte Eigenfrequenz des Schwingungstilgers erreicht.

## Patentansprüche

1. Schwingungstilger mit einer Tilgermasse (2,3) die über mindestens eine Lageranordnung (5) mit einer Fahrzeug Karosserie (1) verbunden ist, wobei die Lageranordnung (5) aus einer Tilgerfeder (10) und einem Tilgerdämpfer (20) besteht, wobei die Tilgermasse (2,3) auf einer Seite um ein Gelenk (6) schwenkbar gelagert ist und sich auf der dazu gegenüberliegenden Seite über die Lageranordnung (5) auf der Fahrzeug Karosserie (1) abstützt, wobei die Tilgermasse (2,3) in bezug auf das Gelenk (6) verstellbar angeordnet ist, **dadurch gekennzeichnet,**
daß alternativ oder zusätzlich zur Tilgermasse (2, 3) auch die vorhandenen Lageranordnungen (5) in bezug auf das Gelenk (6) verstellbar angeordnet sind und
daß die Tilgermasse ein Fahrzeugbauteil ist.

2. Schwingungstilger nach Anspruch 1, dadurch gekennzeichnet, daß die Tilgermasse (2, 3) über Führungen (31, 41; 33, 25; 27; 58) mit einer Auslegerplatte (30) verbunden ist, die an ihrem einen Ende im Gelenk (6) gelagert ist und an ihrem anderen Ende auf der Lageranordnung (5) aufliegt.

3. Schwingungstilger nach einem oder mehreren der vorhergehenden Ansprüche, dadurch gekennzeichnet, daß die Eigenfrequenz des Schwingungstilgers durch eine Veränderung des Abstandes "a" zwischen der Lageranordnung (5) und dem Gelenk (6) einstellbar ist.

4. Schwingungstilger nach einem oder mehreren der vorhergehenden Ansprüche, dadurch gekennzeichnet, daß die Eigenfrequenz des Schwingungstilgers durch eine Veränderung des Abstandes "b" zwischen der Tilgermasse (2, 3) und dem Gelenk (6) einstellbar ist.

5. Schwingungstilger nach einem oder mehreren der vorhergehenden Ansprüche, dadurch gekennzeichnet, daß die Tilgermasse aus einer Hauptmasse (2) und einer Zusatzmasse (3) besteht.

6. Schwingungstilger nach einem oder mehreren der vorhergehenden Ansprüche, dadurch gekennzeichnet, daß die Einstellung der Eigenfrequenz des Schwingungstilgers manuell erfolgt.

7. Schwingungstilger nach einem oder mehreren der vorhergehenden Ansprüche, dadurch gekennzeichnet, daß die Einstellung der Eigenfrequenz des Schwingungstilgers automatisch durch einen Regelkreis erfolgt.

8. Schwingungstilger nach Anspruch 7, dadurch gekennzeichnet, daß der Regelkreis aus folgenden Bauteilen besteht:
einem ersten Sensor (50), der Werte mißt, aus denen sich nach einer Umformung in einem Meßwertumformer (51) die momentane Torsionseigenfrequenz des Fahrzeuges, das heißt der Sollwert der Regelgröße, ergibt;
einem zweiten Sensor (52), der Werte mißt, aus denen sich nach einer Umformung in einem Meßwertumformer (53) die momentane Eigenfrequenz des Schwingungstilgers, das heißt der Istwert der Regelgröße, ergibt;
einem Soll-Istwert-Vergleicher (54), an dem die beiden Sensoren (50, 52) angeschlossen sind und der die Soll-Istwert-Differenz bildet;
einem Regler (55), der in Abhängigkeit von der Soll-Istwert-Differenz eine Stellgröße erzeugt und einem Stellglied (56), das in Abhängigkeit von der Stellgröße die Regelgröße, das heißt die Eigenfrequenz des Schwingungstilgers, einstellt.

9. Schwingungstilger nach Anspruch 8, dadurch gekennzeichnet, daß der Regler (55) ein Proportional-Integral-Differentialregler ist.

10. Schwingungstilger nach Anspruch 8, dadurch gekennzeichnet, daß die Meßwertumformer (51 und 53) jeweils ein Abtastglied aufweisen, das in definierten Zeitabständen den Sollwert bzw. den Istwert an den Soll-Istwert-Vergleicher (54) für eine quasi-stationäre Nachstellung weiterleitet.

11. Schwingungstilger nach einem oder mehreren der vorhergehenden Ansprüche, dadurch gekennzeichnet, daß das Stellglied (56) die Lageranordnung (5) ist und einstellbare Federsteifigkeiten und/oder Dämpfungen erzeugt.

12. Schwingungstilger nach einem oder mehreren der Ansprüche 8 bis 11, dadurch gekennzeichnet, daß das Stellglied (56) der Lageranordnung (5) parallel geschaltet ist und einstellbare Federsteifigkeiten und/oder Dämpfungen erzeugt.

13. Schwingungstilger nach einem oder mehreren der vorhergehenden Ansprüche, dadurch gekennzeichnet, daß das Stellglied (56) ein elektrodynamischer Erreger oder ein servohydraulisch geregelter Stellzylinder ist.

## Claims

1. A vibration damper having a damper mass (2, 3) which is connected through at least one bearing arrangement (5) with a vehicle body (1), the bearing arrangement (5) being formed of a damper spring (10) and a damper absorber (20), the damper mass (2, 3) being mounted pivotably on one side about a joint (6) and supported on the opposite side through the bearing arrangement(s) on the vehicle body (1) while the damper mass (2,3) is arranged adjustably in relation to the joint (6), characterised in that, in alternation or in addition to the damper mass (2, 3),the bearing arrangements (5) present are adjustably arranged in relation to the joint (6) and
in that the damper mass is a vehicle component.

2. A vibration damper according to Claim 1, characterised in that the damper mass (2,3) is connected through guides (31, 41; 33, 25; 27; 58) with a traverse plate (30) which is mounted at its other end in the joint (6) and rests at its other end on the bearing arrangement (5).

3. A vibration damper according to any one or more of the preceding Claims, characterised in that the natural frequency of the vibration damper is adjustable by a variation of the distance "a" between the bearing arrangement (5) and the joint (6).

4. A vibration damper according to any one or more of the preceding Claims, characterised in that the natural frequency of the vibration damper is adjustable by a variation of the distance "b" between the damper mass (2, 3) and the joint (6).

5. A vibration damper according to any one or more of the preceding Claims, characterised in that the damper mass comprises a main mass (2) and a secondary mass (3).

6. A vibration damper according to any one or more of the preceding Claims, characterised in that the adjusting of the natural frequency of the vibration damper is effected manually.

7. A vibration damper according to any one or more of the preceding Claims, characterised in that the adjusting of the natural frequency of the vibration damper is effected automatically by a regulator circuit.

8. A vibration damper according to Claim 7, characterised in that the regulating circuit consists of the following components :
a first sensor (50) which measures values from which, after a conversion in a measured-value converter (51), the momentary natural torsion frequency of the vehicle, that is the ideal value of the regulating magnitude, results;
a second sensor (52), which measures values from which, after a conversion in a measured-value converter (53), the momentary natural frequency of the vibration damper, that is the actual value of the regulating value, results;
an ideal-actual value comparator (54), to which the two sensors (50,52) are attached, and which forms the ideal-actual value difference;
a regulator (55) which produces a setting value in dependence upon the ideal-actual value difference, and a setting member (56), which in dependence upon the setting value adjust the regulating value, that is the natural frequency of the vibration damper.

9. A vibration damper according to Claim 8, characterised in that the regulator (55) is a proportional-integral differential regulator.

10. A vibration damper according to Claim 8, characterised in that the measured-value converters (51 and 53) each comprise a scanning member which at defined time intervals transmits the ideal value and the actual value to the ideal - actual value comparator (54) for a quasi-stationary readjustment.

11. A vibration damper according to any one or more of the preceding Claims, characterised in that the setting member (56) is the bearing arrangement (5) and generates adjustable spring rigidities and/or dampings.

12. A vibration damper according to any one or more of Claims 8 to 11, characterised in that the setting member (56) is arranged parallel to the bearing arrangement (5) and generates adjustable spring rigidities and/or dampings.

13. A vibration damper according to any one or more of the preceding Claims, characterised in that the setting member (56) is an electro-dynamic stimulator or a servo-hydraulically regulated setting cylinder.

## Revendications

1. Amortisseur de vibrations comprenant une masse amortisseur (2, 3) reliée à la carrosserie d'un véhicule (1) par au moins un système porteur (5) composé d'un ressort (10) et d'un amortisseur (20), la masse amortisseur (2, 3) montée d'un côté sur une articulation de pivotement (6) et reposant par le côté opposé sur la carrosserie (1) par l'intermédiaire de système porteur (5), pouvant se déplacer par rapport à l'articulation (6), caractérisé en ce que, en alternative ou en complément à la masse amortisseur (2, 3) les systèmes porteurs (5) sont mobiles par rapport à l'articulation (6) et que la masse amortisseur est un élément constitué du véhicule.

2. Amortisseur selon la revendication 1, caractérisé en ce que la masse amortisseur (2, 3) est reliée par des guides (31, 41 ; 33, 25 ; 27 ; 58) à une plaque support (30), reliée à une de ses extrémités à une articulation ( 6) et posée à l'autre extrémité sur le système porteur (5).

3. Amortisseur de vibrations selon une ou plusieurs des revendications précédentes, caractérisé en ce que la fréquence propre de l'amortisseur peut être réglée par modification de la distance "a" entre le système porteur (5) et l'articulation (6).

4. Amortisseur selon une ou plusieurs des revendications précédentes, caractérisé en ce que la fréquence propre de l'amortisseur peut être réglée par modification de la distance "b" entre la masse amortisseur (2, 3) et l'articulation (6).

5. Amortisseur selon une ou plusieurs des revendications précédentes, caractérisé en ce que la masse amortisseur est constituée d'une masse principale (2) et d'une masse auxiliaire (3).

6. Amortisseur selon une ou plusieurs des revendications précédentes, caractérisé en ce que le réglage de la fréquence propre de l'amortissement est effectué manuellement.

7. Amortisseur selon une ou plusieurs des revendications précédentes, caractérisé en ce que le réglage de la fréquence propre de l'amortisseur est réalisée automatiquement par le circuit de régulation.

8. Amortisseur selon la revendication 7, caractérisé en ce que le circuit de régulation comprend :
   - un détecteur (50) qui mesure des valeurs à partir desquelles est établie, par passage dans un convertisseur de mesure (51) la valeur instantanée de la fréquence propre de torsion du véhicule, c'est-à-dire la valeur de consigne de la grandeur à régler ;
   - un second détecteur (52) qui mesure des valeurs à partir desquelles est établie, par passage dans un transformateur de données (53) la valeur instantanée de la fréquence propre de l'amortisseur de vibrations, c'est-à-dire la valeur réelle de la grandeur à régler ;
   - un comparateur réalité/consigne (54), auquel sont raccordés les deux détecteurs (50, 52) et qui détermine la différence entre valeur réelle et valeur de consigne ;
   - un régulateur (55) qui génère une grandeur de réglage à partir de la différence entre valeur réelle et valeur de consigne, ainsi qu'un organe de réglage (56) qui règle, en fonction de la grandeur de réglage, la grandeur de réglage, c'est-à-dire la fréquence propre de l'amortisseur de vibrations.

9. Amortisseur de vibrations selon la revendication 8, caractérisé en ce que le régulateur (55) est du type proportionnel, intégral, différentiel.

10. Amortisseur selon la revendication 8, caractérisé en ce que les transformateurs de valeur de mesures (51, 53) sont équipés chacun d'un organe de balayage qui, à des intervalles de temps donnés, transmet les valeurs de consigne et réelle au comparateur correspondant (54) pour un réglage quasi permanent.

11. Amortisseur de vibrations selon une ou plusieurs des revendications précédentes, caractérisé en ce que l'organe de réglage (56) est constitué par le système porteur (5) et génère des rigidités élastiques et/ou des amortissements réglables.

12. Amortisseur de vibrations selon une ou plusieurs des revendications 8 à 11, caractérisé en ce que l'organe de réglage (56) et monté en parallèle par rapport au système porteur (5) et génère des rigidités élastiques et/ou des amortissements réglables.

13. Amortisseur de vibrations selon une ou plusieurs des revendications précédentes, caractérisé en ce que l'organe de réglage (56) à un excitateur électrodynamique ou un cylindre de réglage à régulation servo hydraulique.

Fig.1

Fig.2

Fig.3

Fig.4

Fig.5

Fig.6

Fig.7

Fig.8

Fig. 9

*Fig.10*

*Fig.11*